# EUROPEAN PATENT SPECIFICATION

(11) **EP 3 097 784 B1**
(45) Date of publication and mention of the grant of the patent: **18.04.2018**
(21) Application number: 16171781.4
(22) Date of filing: 27.05.2016
(51) Int. Cl.: A21C 9/06

(54) **APPARATUS FOR MAKING AL PLIN RAVIOLI**
VORRICHTUNG ZUR HERSTELLUNG VON AL-PLIN RAVIOLI
APPAREIL POUR PRODUCTION DE RAVIOLI AL-PLIN

(30) Priority: 27.05.2015 IT UB20151013
(43) Date of publication of application: 30.11.2016
(73) Proprietor: Porcari, Gabriele, 29010 Alseno (PC) (IT)
(72) Inventor: Porcari, Gabriele, 29010 Alseno (PC) (IT)
(74) Representative: Benelli, Cristian

(56) References cited:
- EP-A1- 0 447 367
- GB-A- 1 350 447
- Moskydog: "Agnolotti made fresh at Tarry Market", , 19 January 2011 (2011-01-19), pages 1-2, XP054976822, Retrieved from the Internet: URL:https://www.youtube.com/watch?v=X_8NSi op_oE [retrieved on 2016-10-10]
- MrFlyingcook: "Confezionamento plin", , 12 September 2009 (2009-09-12), pages 1-2, XP054976823, Retrieved from the Internet: URL:https://www.youtube.com/watch?v=ySU8Sh _Qax0 [retrieved on 2016-10-10]
- Luisa Ribaldone: "Macchina Agnolotti al Plin 2_ TuttoPasta srl", , 27 May 2014 (2014-05-27), pages 1-2, XP054976824, Retrieved from the Internet: URL:https://www.youtube.com/watch?v=5FLSxC kLzE8 [retrieved on 2016-10-10]

## Description

### SCOPE OF THE INVENTION

The present invention relates to the field of food processing machines for the production of fresh pasta, and in particular for the production of agnolotti, a filled pasta specialty generally called al plin ravioli. In particular, the present invention relates to the machine part which receives the dough and the filling and through shaping element, cutting blades and folding elements is able to obtain the typical shape of the al plin ravioli.

### PRIOR ART

Some types of machines for the production of agnolotti are known in the prior art which generally work with the dough stretched vertically; this is folded, thereby creating a horizontal U within which the filling is inserted, to then move to the shaping, folding and cutting steps.

These machines are also often designed for a single format of stuffed pasta or, if flexible, they require the replacement of several components.

The video "Agnoloti made fresh at Tarry Market", uploaded by "Moskydog" on 19-01-2011 with URL: https://www.youtube.com/watch?v=X_8NSiop_o discloses in combination all the features in the preamble of claim 1.

The video "Confezionamento plin", uploaded by "MrFlyingcook" on 12-09-2009 with URL: https://www.youtube.com/watch?v=ySU8Sh_Qax0 discloses an apparatus for making ravioli al plin, comprising a roller, a cutting wheel, a folding group and a cutting roller.

### DESCRIPTION AND ADVANTAGES OF THE INVENTION

An object of the present invention is to provide an improved mold with a simple, functional and compact solution. In fact, said mold can be manufactured as a compact and independent monobloc in which the various components such as shaping elements, cutting blades, retaining wheels and folding elements, arranged successively, are mounted on a single structure and controlled by a single motorized drive. Said mold can be integrated within a ravioli maker or independently positioned downstream of the machine that prepares the dough and the filling.

These and other objects are achieved with the features of the invention described in the independent claim 1. The dependent claims describe preferred and/or particularly advantageous aspects of the invention.

In particular, the embodiment of the present invention provides a solution that works by keeping the dough horizontal; the filling is continuously positioned on said dough in the shape of a tube; before entering the machine object of the present invention, the two edges of the dough are lifted so as to form a vertical U containing the filling.

With this solution it is possible to implement a compact mold which simplifies the format changeover operations.
Said objects and advantages are all achieved by the mold for the production of al plin ravioli object of the present invention, which is characterized by the claims below.

### BRIEF DESCRIPTION OF THE FIGURES

This and other features will be more apparent from the following description of some of the configurations, illustrated purely by way of example in the accompanying drawings.

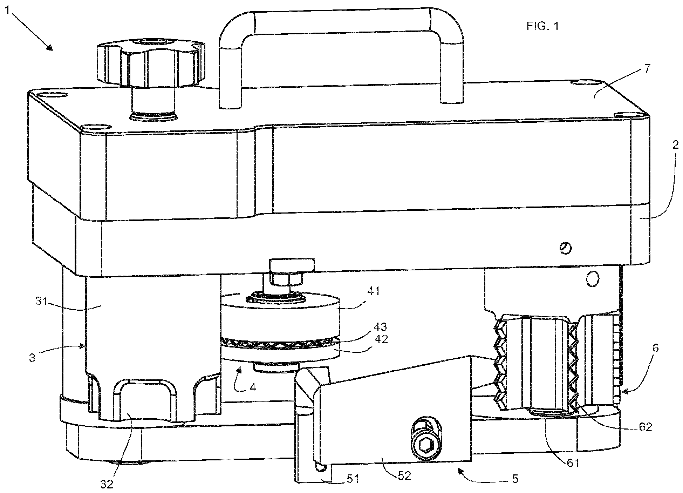

- Figure 1: shows a side view of the mechanical parts that make up the mold according to the invention, highlighting the side on which the shaping and cutting of the al plin ravioli is carried out;
- Figure 2: shows a side view, from the side where the shaping and cutting of the al plin ravioli is carried out, in which in addition to the mechanical parts that make up the mold, the dough in the shaping, cutting and folding steps is also shown;
- Figure 3: shows an isometric bottom view in which, in addition to the mechanical parts of the mold, the ravioli shaping step is highlighted;
- Figure 4: shows an isometric view from the dough inlet side in which, in addition to the mechanical parts of the mold, the ravioli folding step is highlighted; it is noted that in said figure, the shaping and cutting roller is intentionally omitted;
- Figure 5: shows two isometric views of the element that folds the ravioli, highlighting the deflecting blade on the inlet side and the rolling element on the outlet side;

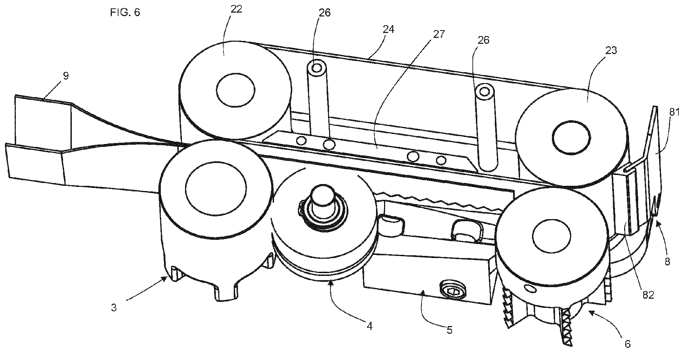

- Figure 6: shows a top sectional view of the mechanical parts that make up the mold in which the belt on which the dough rests is also visible;
- Figure 7: shows a representation of the ravioli maker on which the mold is installed;
- Figure 8: shows a side view of the ravioli maker in which the components for inserting the filling are highlighted.

### DESCRIPTION OF THE INVENTION

With particular reference to the above figures, a mold 1 for the production of al plin ravioli is shown. In the accompanying figures and in the present description, reference is made to a mold 1 in which the mechanical components are assembled on a single frame 2 so as to make the mold easily mountable/demountable on a complete machine 10 without this being a limit to present invention.

Frame 2 and counter-frame 21 support the dough support and advancement belt 24, in addition to all the rotary and stationary elements necessary for shaping, folding and cutting the al plin ravioli. Rollers 22 and 23 are positioned between frame 2 and counter-frame 21 and they have a vertical axis and support and drive the dough support and advancement belt 24. Roller 22, in the example, is motorized, while roller 23 is idle and also serves as tensioner for belt 24, its position being adjustable along eyelet 25; belt 24 rests on an abutment plane 27 that contrasts the dough shaping and cutting elements. Elements 26 act as spacers for the connection and the correct positioning of frame 2 and counter-frame 21.

Starting from the inlet side of the stuffed dough 9, the following are mounted in succession on frame 2:
- At least one shaping roller 3,
- At least one cutting wheel 4,
- At least one folding group 5,
- At least one cutting roller 6,
- At least one scraper 8.

The shaping roller 3, the cutting roller 6 and the belt 24 drive roller 22 have mutually parallel vertical rotation axis, are activated by a single motor and are connected via a series of mechanical transmissions which ensure the full synchronization thereof. The motion transmission system between the above components is mounted on frame 2 and protected by crankcase 7.

The shaping roller 3 is a motorized drum made of stainless steel which has an area with a smooth surface 31, on the side of frame 2, while at the other end it is machined and a series of pockets 32 with constant pitch are formed therein having a shape suitable for making the ravioli. The cutting wheel 4 with rotation axis parallel to that of roller 3 is positioned in contact on the smooth surface 31 of the shaping roller 3; said cutting wheel 4 is idle and driven by belt 24 by friction. The cutting wheel 4 includes two cylindrical food-grade sponges 41 and 42 at the two ends, preferably made of food-grade silicone foam; a circular element 43 is mounted at the center, provided with a series of blades having a suitable shape to achieve the zigzag finishing typical of the ravioli edge. The cutting wheel 4 is adjustable in height.

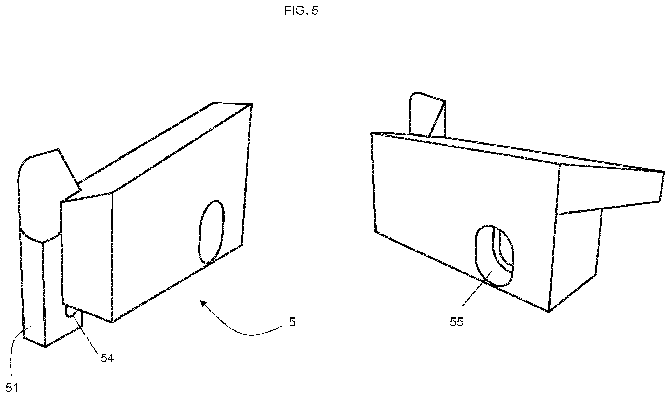

The ravioli folding group 5 is mounted on counter-frame 21; group 5 (shown in detail in figure 5) consists of a first stainless steel plate 51, referred to as deflecting blade 51, and a second plate 52, referred to as rolling element. Eyelets 54 and 55 are provided both on the deflecting blade 51 and on the rolling element 52 for adjusting the folding level.

The cutting roller 6 is mounted on frame 2. Said cutting roller 6 is a motorized drum with rotation axis parallel to the axis of the shaping roller 3. Said cutting roller 6 is connected to the shaping roller 3 through a series of mechanical transmissions, which ensure the complete synchronization between the two rollers; it is made of stainless steel and has a series of pockets 61 at constant pitch which end with blades 62 having a suitable shape for cutting/separating one ravioli from the next.

At the exit of belt 24, a scraper 8 is positioned that is made of a folded plate 81 on which a shaped extrusion 82, which rests on belt 24 without damaging it, is mounted.

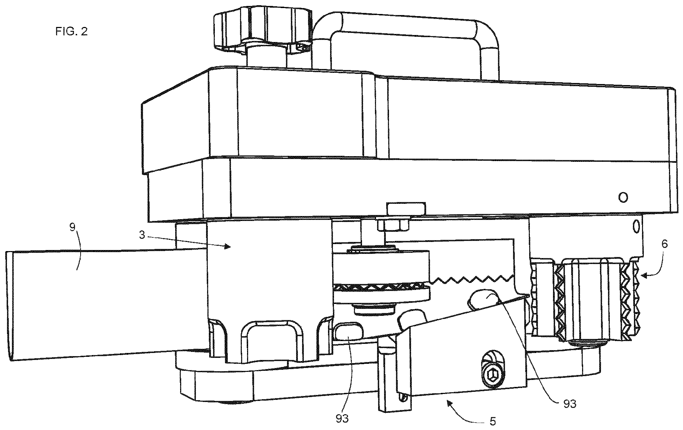

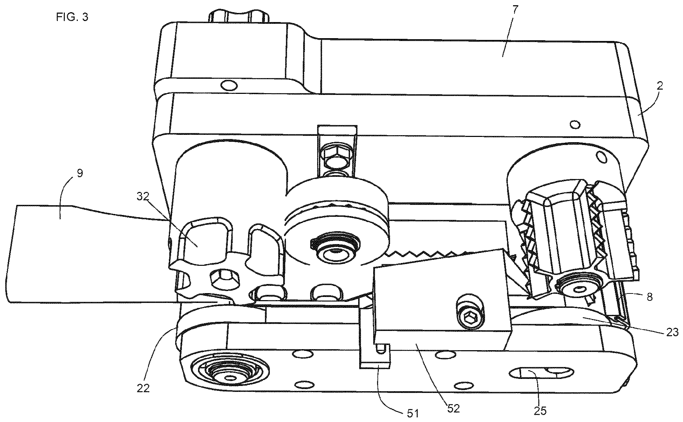

With particular reference to figures 2, 3 and 4, dough 9 containing the filling that passes through mold 1 is shown. Dough 9 that enters into mold 1 is U-shaped with opening upwards and already contains the filling resting on the lower part of the U and continuously inserted in the shape of a tube by means of element 11 of the ravioli maker 10. The dough with the filling enters into mold 1 resting on belt 24.

The shaping roller 3 flattens dough 9 joining the two edges of the U in the upper part by means of the smooth surface 31 of the drum; in the lower part of the U containing the filling, by means of pockets 32, it forms the ravioli 93.

Dough 9 then passes under the cutting wheel 4 which rests on the part of the dough without filling and, through a series of blades provided on the circular element 43, it imparts the typical zigzag finishing to the edge of the ravioli. The cutting wheel 4 is adjustable in height in order to optimize the use of the dough, reducing the waste thereof. Said wheel 4 is driven by belt 24 and has a rotary motion opposite to that of the shaping roller 3; being placed in contact with the shaping roller 3, it prevents the dough, by remaining attached to the shaping roller 3, from acting as a scraper.

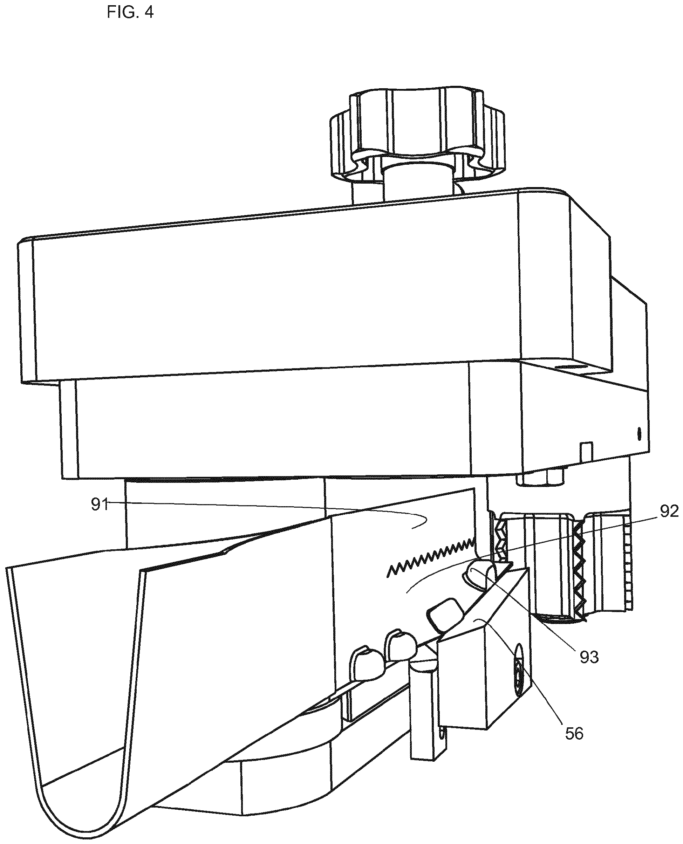

The two food-grade sponges 41 and 42 of wheel 4 are designed to keep dough 9 attached to belt 24; said sponges 41 and 42 remove the air between belt 24 and dough 9, allowing the latter to adhere perfectly as if a vacuum was created and to remain attached to belt 24 even after exiting from wheel 4. The food-grade sponge 41 makes the part of cut dough 91 adhere, which is subsequently discarded, while sponge 42 makes the part of dough 92 adhere, which is part of the ravioli and which during the subsequent folding step could detach. Once exited from the cutting wheel 4, dough 9 is lifted at ravioli 93 by means of the folding group 5. In particular, the deflecting blade 51 causes a first detachment of the dough from belt 24 and the rolling element 52 folds it, lifting the ravioli 93 until they are approximately perpendicular to the uncut dough 92, i.e. to belt 24. Figure 4 shows surface 56 and its shape adapted to allow the positioning of the lifted ravioli 93.

The adjustment of the folding level takes place by means of the eyelets provided on both elements 51 and 52.

Dough 9 then passes under the cutting roller 6 which separates the single ravioli 93, completing the preparation of the al plin ravioli. The scrap dough 91 is eliminated.

Scraper 8 facilitates the exit of the finished ravioli from mold 1 and keeps belt 24 on which it rests clean. The al plin ravioli exit from mold 1 to be stored in dedicated containers or to be transferred by means of belts.

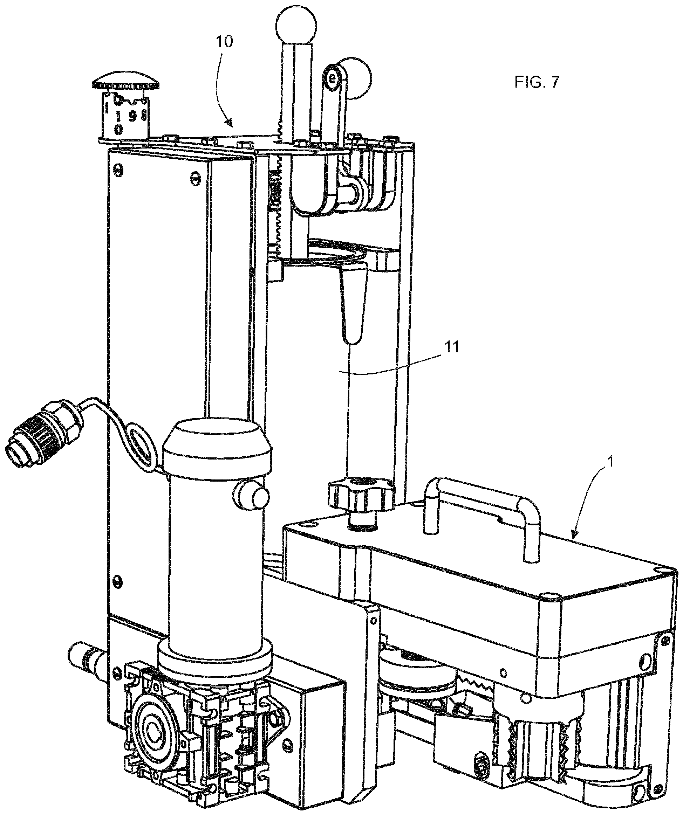

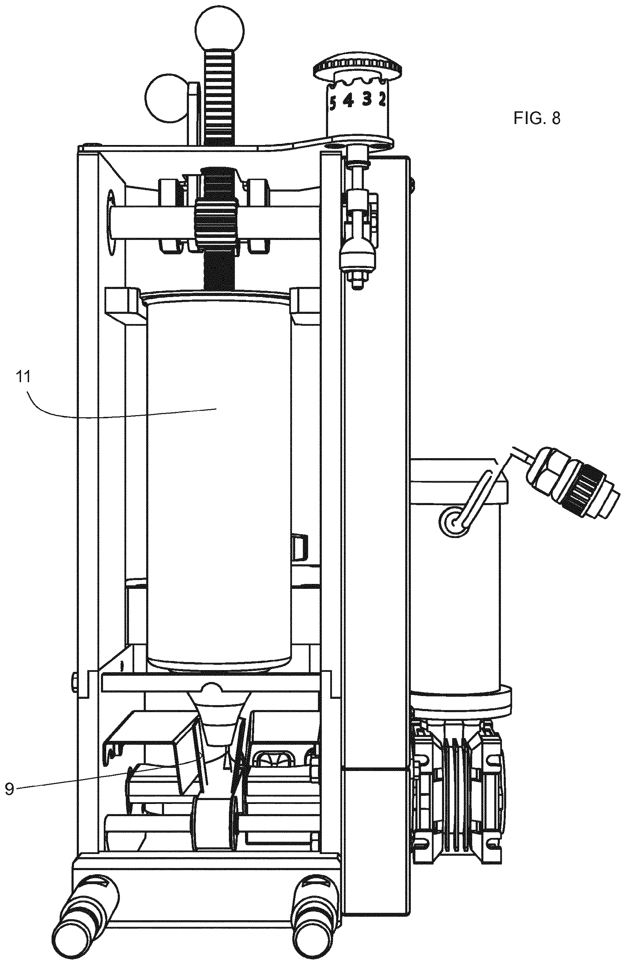

Figures 7 and 8 show the assembly of mold 1 on a ravioli maker 10 by an integrated and easy to replace embodiment. Mold 1 may also be placed downstream of a ravioli maker without necessarily being completely integrated in it, but keeping its own independent support structure.

It is understood, however, that the above description is a non-limiting example, therefore possible variants of detail that may be necessary for technical and/or functional reasons are deemed as falling within the same protection scope defined by the following claims.

The mold may also be made without all its components connected to the same frame. The rotary and stationary elements necessary for shaping, folding and cutting the al plin ravioli may therefore be part of a same machine without necessarily having a common support structure and each may be mounted independently of the next one, as long as the operating sequence and synchronization are ensured.

A further embodiment may be multiple lane machine, thus with multiple belts 24, possibly synchronized together, each having its own group of rotary and stationary elements necessary for shaping, folding and cutting the al plin ravioli.

## Claims

1. Mold (1) for the production of al plin ravioli (93) using dough (9), wherein said mold (1) comprises a frame (2) and a counter-frame (21) between which at least a couple of drive rollers (22, 23), which drive a dough support and advancement belt (24), are positioned; wherein at least one shaping roller (3), at least one cutting wheel (4), at least one folding group (5) and at least one cutting roller (6) are mounted successively on the frame (2); wherein said shaping roller (3), belt (24), cutting roller (6) and drive rollers (22, 23) have mutually parallel rotation axes; wherein the shaping roller (3) is a drum bearing at least one area with a smooth surface (31) on the frame side (2), while on the other end it has a series of pockets (32) with constant pitch in order to shape the ravioli (93); wherein the cutting wheel (4) is driven by the belt (24) by friction and wherein the cutting roller (6) is a drum which has a series of pockets (61) with constant pitch which end with blades (62);
the mold (1) being **characterized in that** the cutting wheel (4) comprises at the two ends at least two cylindrical sponges (41) and (42) made of material suitable for handling food and a central circular element (43) provided with a series of blades; the sponges (41) and (42) are positioned such that they are in contact with the smooth surface (31) of the shaping roller (3).

2. Mold (1) according to claim 1, **characterized in that** the folding group (5) comprises at least one deflecting blade (51) and at least one rolling element (52); the deflecting blade (51) producing a first detachment of the dough from the belt (24) and the rolling element (52) lifting the ravioli (93) before the final cut by means of the cutting roller (6).

3. Mold (1) according to claim 2, **characterized in that** the rolling element (52) lifts the ravioli (93) up to being approximately perpendicular to the uncut dough (92).

4. Mold (1) according to claim 2, **characterized in that** the folding group (5) is mounted on the counter-frame (21); both on the deflecting blade (51) and on the rolling element (52), there are eyelets (54) and (55) for adjusting the folding level.

5. Mold (1) according to claim 1, **characterized in that** at the exit of the belt (24), a scraper (8) is positioned, and it is made of a folded plate (81) on which a shaped extrusion (82), which rests on the belt (24), is mounted.

6. Mold (1) according to claim 1, **characterized in that** said shaping roller (3), cutting roller (6) and roller (22) are activated by a single motor.

## Patentansprüche

1. Form (1) zur Herstellung von Plin Ravioli (93) unter Verwendung von Teig (9), wobei die besagte Form (1) zwischen sich einen Rahmen (2) und einen Gegenrahmen (21) aufweist, wobei mindestens ein Paar Antriebsrollen (22, 23) positioniert sind, die eine Teigauflage und ein Zuführband (24) betätigen; wobei mindestens eine Formwalze (3), mindestens ein Schneidrad (4), mindestens eine Faltanordnung (5) und mindestens eine Schneidrolle (6) nacheinander an dem Rahmen (2) angebracht sind; wobei die besagte Formwalze (3), Band (24), Schneidwalze (6) und Antriebsrollen (22, 23) zueinander parallele Rotationsachsen aufweisen; wobei die Formwalze (3) eine Trommel ist, die mindestens einen Bereich mit einer glatten Oberfläche (31) an der Seite (2) des Rahmens trägt, während sie am anderen Ende eine Reihe von Taschen (32) mit einer konstanten Teilung aufweist, um die Form von Ravioli (93) zu erhalten; wobei das Schneidrad (4) durch den Band (24) mittels Reibung angetrieben wird und wobei die Schneidrolle (6) eine Trommel ist, die eine Reihe von Taschen (61) mit einer konstanten Teilung aufweist, deren Ende mit Klingen (62) versehen ist; wobei die Form (1) **dadurch gekennzeichnet ist, dass** das Schneidrad (4) an seinen beiden Enden mindestens zwei zylindrische Schwämme (41) und (42) aufweist, die aus einem zur Behandlung von Lebensmitteln geeigneten Material bestehen und einem zentralen kreisförmigen Element (43) mit einer Reihe von Klingen aufweisen; wobei die Schwämme (41) und (42) derart positioniert sind, dass sie in Kontakt mit der glatten Oberfläche (31) der Formwalze (3) stehen.

2. Form (1) nach Anspruch 1, **dadurch gekennzeichnet, dass** die Falteinheit (5) mindestens eine Umlenkklinge (51) und mindestens ein Rollelement (52) umfasst; wobei die Umlenkklinge (54) eine erste Ablösung des Teigs vom Band (24) bewirkt und das Rollelement (52) die Ravioli (93) vor dem endgültigen Schneiden mittels der Schneidrolle (6) anhebt.

3. Form (1) nach Anspruch 2, **dadurch gekennzeichnet, dass** das Rollelement (52) die Ravioli (93) anhebt, um ungefähr senkrecht zu dem nicht geschnittenen Teig (92) positioniert zu werden.

4. Form (1) nach Anspruch 2, **dadurch gekennzeichnet, dass** die Faltanordnung (5) an dem Hilfsrahmen (21) angebracht ist; wobei sowohl die Umlenkklinge (51) als auch das Rollelement (52) mit Ösen (54) und (55) zum Einstellen des Biegepegels versehen sind.

5. Form (1) nach Anspruch 1, **dadurch gekennzeichnet, dass** am Ausgang des Bandes (24) ein Abstreifer (8) positioniert ist, der von einer Faltplatte (8) gebildet ist, an der ein Profilstrang (82) angebracht ist, die auf dem Band (24) ruht.

6. Form (1) nach Anspruch 2, **dadurch gekennzeichnet, dass** die Formwalze (3), die Schneidwalze (6) und die Walze (22) von einem einzigen Motor angetrieben werden.

## Revendications

1. Moule (1) pour la fabrication de raviolis plin (93) en utilisant une pâte (9), dans lequel ledit moule (1) comprend un cadre (2) et un contre-cadre (21), entre au moins une paire de rouleaux d'entraînement (22, 23) sont positionnés, qui actionnent un support de pâte et une courroie d'alimentation (24), dans lequel au moins un rouleau de formage (3), au moins une roue de coupe (4), au moins un ensemble de pliage (5) et au moins un rouleau de coupe (6) sont montés successivement sur le cadre (2); dans lequel ledit rouleau de formage (3), ladite courroie (24), ledit rouleau de coupe (6) et lesdits rouleaux d'entraînement (22, 23) ont des axes de rotation parallèles réciproques; dans lequel le rouleau de formage (3) est un tambour qui porte au moins une zone avec une surface lisse (31) sur le côté (2) du cadre, tandis qu'à l'autre extrémité se trouve une série de poches (32) avec un pas constant afin d'obtenir la forme de ravioli (93); dans lequel la roue de coupe (4) est entraînée par la courroie (24) au moyen d'un frottement et dans lequel le rouleau de coupe (6) est un tambour qui présente une série de poches (61) à pas constant qui se terminent par des lames (62); le moule (1) étant **caractérisé en ce que** la roue de coupe (4) comporte aux deux extrémités au moins deux éponges cylindriques (41) et (42) constituées d'un matériau apte au traitement des produits alimentaires et d'un élément circulaire central (43) muni d'une série de lames; les éponges (41) et (42) sont positionnées de manière à être en contact avec la surface lisse (31) du rouleau de formage (3).

2. Moule (1) selon la revendication 1, **caractérisé en ce que** l'unité de pliage (5) comprend au moins une lame de déviation (51) et au moins un élément de roulement (52); la lame de déflexion (54) provoque un premier détachement de la pâte de la courroie (24) et l'élément roulant (52) soulève les raviolis (93) avant la coupe finale au moyen du rouleau de coupe (6).

3. Moule (1) selon la revendication 2, **caractérisé en ce que** l'élément de roulement (52) soulève les raviolis (93) jusqu'à être sensiblement perpendiculaires à la pâte non coupée (92).

4. Moule (1) selon la revendication 2, **caractérisé en ce que** l'ensemble de pliage (5) est monté sur le contre-cadre (21); la lame de déflexion (51) et l'élément de roulement (52) sont munis d'oeillets (54) et (55) pour ajuster le niveau de pliage.

5. Moule (1) selon la revendication 1, **caractérisé en ce qu'**à la sortie de la courroie (24) est positionné un racloir (8) qui est formé par une plaque pliée (8) sur laquelle est montée une extrusion profilée (82), qui repose sur la courroie (24).

6. Moule (1) selon la revendication 2, **caractérisé en ce que** ledit rouleau de formage (3), le rouleau de coupe (6) et le rouleau (22) sont entraînés par un seul moteur.
